# EUROPÄISCHE PATENTSCHRIFT

(11) **EP 3 326 468 B1**
(45) Veröffentlichungstag und Bekanntmachung des Hinweises auf die Patenterteilung: **21.08.2019**
(21) Anmeldenummer: 17202561.1
(22) Anmeldetag: 20.11.2017
(51) Int. Cl.: A22C 13/00, B32B 5/02, B32B 27/12, B32B 27/08, B32B 27/32, B32B 7/12, B32B 37/12, A23P 20/20, A23L 27/20, A23L 13/00, B32B 38/00

(54) **SCHLAUCHFÖRMIGE NAHRUNGSMITTELHÜLLE MIT ÜBERTRAGUNGSFUNKTION**
TUBULAR FOOD CASING WITH TRANSFER FUNCTION
BOITIER ALIMENTAIRE TUBULAIRE AVEC FONCTION DE TRANSFERT

(30) Priorität: 24.11.2016 DE 102016223297
(43) Veröffentlichungstag der Anmeldung: 30.05.2018
(73) Patentinhaber: Kalle GmbH, 65203 Wiesbaden (DE)
(72) Erfinder: Kastl, Erna, 65510 Hünstetten (DE); Fögler, Jens, 65232 Taunusstein (DE); Delius, Ulrich, 60529 Frankfurt a.M. (DE); König, Martina, 65207 Wiesbaden (DE)
(74) Vertreter: Plate, Jürgen

(56) Entgegenhaltungen:
- EP-A1- 2 298 549
- WO-A2-2004/000026
- DE-A1- 10 337 009
- US-A1- 2009 155 430
- US-B1- 6 200 613

## Beschreibung

Die vorliegende Erfindung betrifft eine schlauchförmige Nahrungsmittelhülle mit einer Faserschicht, die die Innenseite der Nahrungsmittelhülle bildet, und zwei oder mehr Polymerschichten umfasst. Die Erfindung betrifft daneben ein Verfahren zur Herstellung der schlauchförmigen Nahrungsmittelhülle sowie ihre Verwendung als künstliche Wursthülle.

Schlauchförmige Kunststoffhüllen werden überwiegend bei der Herstellung von Koch- und Brühwürsten verwendet. Diese Nahrungsmittelhüllen müssen unterschiedlichsten Anforderungen Rechnung tragen, um in der Praxis Anwendung zu finden. So müssen diese Nahrungsmittelhüllen beispielsweise eine hohe Barrierewirkung gegenüber Sauerstoff und Wasserdampf aufweisen und eine Abgabe von Farb- und Aromastoffen aus der Hülle auf das Nahrungsmittel bewirken.

In der EP 0 758 527 A1 ist eine biaxial orientierte Nahrungsmittelhülle offenbart, auf deren Innen- und Außenseite sich jeweils eine Schicht überwiegend aus aliphatischem Polyamid befindet. Dazwischen liegt mindestens eine polyolefinische Schicht und mindestens eine weitere Schicht, überwiegend aus EthylenNinylalkohol-Copolymeren.

In der EP 2 848 390 A1 ist eine mehrschichtige, mindestens sieben Schichten umfassende Folie beschrieben, die unterhalb einer äußeren Schicht auf Basis von Polybutylenterephthalat (PBT) weitere Schichten auf Basis von Polyolefinen, Polyamiden und EthylenNinylalkohol-Copolymeren aufweist. Mindest eine der sieben Schichten besteht aus einem Haftvermittler.

In der US 6200613 B1 und in der DE 198 46 305 A1 sind Nahrungsmittel-Barrierehüllen für Koch und Brühwürste, Schinken, Pökelwaren oder Schmelzkäse offenbart. Die Nahrungsmittelhülle besteht in einer bevorzugten Ausführungsform aus einer Barrierehülle aus zwei äußeren Polyethylenschichten und einer dazwischen liegenden Polyamidschicht. Die Barrierehülle ist an der Innenseite mit einer saugfähigen Innenlage, etwa einem Cellulosefaser-Vlies, beschichtet.

In der US 2009/0155430 A1 ist ein Folienlaminat zur Verpackung von Nahrungsmitteln beschrieben.

Ein bekanntes Problem bei der Herstellung von schlauchförmigen Nahrungsmittelhüllen ist die Einstellung des thermischen Schrumpfvermögens. Der Schrumpf darf nicht bereits durch Wärmeeinwirkung bei der Herstellung der schlauchförmigen Nahrungsmittelhülle ausgelöst werden. Andererseits ist in der Anwendung der Hüllen, insbesondere beim Brüh- und/oder Kochprozess, eine gewisse Rücksprungelastizität zwingend notwendig, um später einen straffen, faltenfreien Sitz der Hülle zu gewährleisten. Kunststofffolien erhalten eine merkliche Rücksprungelastizität erst dann, wenn sie durch Verstreckung in der betreffenden Richtung orientiert wurden. Durch diese Orientierung wird jedoch zusätzlich ein thermisches Schrumpfvermögen in der bzw. den Streckrichtung(en) induziert. Diese Schrumpfneigung lässt sich durch Thermofixieren der Folie direkt nach dem Verstrecken verringern, aber nicht gänzlich beseitigen.

Die Aufgabe der vorliegenden Erfindung war es somit eine schlauchförmige Nahrungsmittelhülle bereitzustellen, die eine gute Rücksprungelastizität nach dem Befüllen und Erhitzen des Füllgutes aufweist und gleichzeitig eine hohe Aufnahmefähigkeit für Farb- und Aromastoffe besitzt sowie die Fähigkeit, diese auf ein in der Hülle befindliches Nahrungsmittel zu übertragen. Eine weitere Aufgabe der vorliegenden Erfindung war es, ein wirtschaftliches Verfahren für eine solche schlauchförmige Nahrungsmittelhülle bereitzustellen.

Gelöst wird die Aufgabe durch eine schlauchförmigen Nahrungsmittelhülle mit einer Faser- oder Vliesschicht auf der Innenseite, die Farb-, Aroma- und/oder Geschmacksstoffe aufnehmen, speichern und wieder abgeben kann, und einer mono- oder biaxial orientierten Folie auf Basis von Polyamid und/oder Copolyamid, die außen mit der Faser- oder Vliesschicht verbunden ist. Die Faser- oder Vliesschicht ist zudem auf der von dem Nahrungsmittel abgewandten Seite mit einer kontinuierlichen thermoplastischen Beschichtung versehen. Die Beschichtung durchdringt nicht die gesamte Faser- oder Vliesschicht, so dass diese aufnahmefähig bleibt für Farb-, Aroma- und/oder Geschmacksstoffe. Durch die Rücksprungelastizität der Polyamidfolie liegt die Hülle auch nach dem Brühen oder Kochen des umhüllten Nahrungsmittels noch faltenfrei an.

Die Erfindung betrifft demgemäß eine schlauchförmige Nahrungsmittelhülle gemäß Anspruch 1.

Die Polymerschicht(en) besteht/bestehen aus einem oder mehreren thermoplastischen Kunststoff(en) und gegebenenfalls kleineren Anteilen an üblichen organischen und/oder anorganischen Additiven.

Die erfindungsgemäße schlauchförmige Nahrungsmittelhülle umfasst bevorzugt zusätzlich zu der ersten Polymerschicht (A) und der Polymerschicht (B) mindestens eine Polymerschicht (C).

Die innere Faserschicht, die die Innenseite der schlauchförmigen Nahrungsmittelhülle bildet, besteht aus einer saugfähigen Faserschicht, die in der Lage ist Farb- und Aromastoffe aufzunehmen, zu speichern und diese wieder an ein Füllgut abzugeben. Die innere Faserschicht kann ein Gewebe, Gestricke, ein Faservlies oder ein Faserpapier sein. Als besonders vorteilhaft hinsichtlich der Eigenschaft Farb- und Aromastoffe aufzunehmen und diese wieder an das Füllgut abzugeben hat sich gemäß der Erfindung ein Faservlies erwiesen, das aus Fasern aus einem thermoplastischen Kunststoff und Cellulosefasern besteht. Bei einer besonders bevorzugten Ausführungsform sind die thermoplastischen Fasern nach zumindest teilweisem Aufschmelzen an den Kreuzpunkten miteinander fest verbunden.

Die Fasern aus thermoplastischem Kunststoff haben allgemein eine Dicke von 0,5 bis 8 Denier (den), bevorzugt 1 bis 5 den. Ihre Länge beträgt in der Regel 0,3 bis 15 mm, bevorzugt 4 bis 8 mm. Der Anteil der Fasern aus thermoplastischem Kunststoff beträgt 1 bis 20 Gew.-%, bevorzugt 3 bis 17 Gew.-%, besonders bevorzugt 6 bis 14 Gew.-%, bezogen auf das Gewicht des Faservlieses.

Die Cellulosefasern sind bevorzugt Hanffasern und/oder Abacafasern. Anstelle oder zusätzlich zu den Hanffasern und/oder Abacafasern können auch andere pflanzliche cellulosische Fasern oder davon abgeleitete, insbesondere chemisch modifizierte pflanzliche Fasern und/oder Fasern aus regenerierter Cellulose (Viskosefasern) verwendet werden.

Die innere Faserschicht ist ein Faservlies oder ein Faserpapier. Sie weist allgemein ein Flächengewicht im Bereich von 10 bis 70 g/m², bevorzugt von 20 bis 55 g/m², besonders bevorzugt von 25 bis 35 g/m², auf.

Die erste Polymerschicht (A) ist eine geschlossene Schicht, die die Faserschicht auf der der Innenseite abgewandten Seite, also der vom Füllgut abgewandten Seite, vollständig abdeckt. Dabei umschließt die Polymerschicht (A) die Fasern der Faserschicht zumindest teilweise, um zu gewährleisten, dass eine mechanische Verankerung des Polymers in der Faserschicht vorliegt. Die erste Polymerschicht (A) deckt die Faserschicht auf der später dem Nahrungsmittel zugewandten Innenseite vollständig ab. Damit ist gewährleistet, dass keine Migration von Komponenten aus der/den Klebstoffschicht(en) durch das Fasermaterial hindurch auf das Füllgut stattfindet.

Die erste Polymerschicht (A), mit der die innere Faserschicht auf der der Innenseite abgewandten Seite der schlauchförmigen Hülle beschichtet ist, umfasst bevorzugt ein Olefin-(Co)Polymer. Es gibt keine spezifischen Einschränkungen hinsichtlich der Olefin-(Co)Polymere, solange diese in der Lage sind, die innere Faserschicht vollständig abzudecken. Bevorzugte Olefin-(Co)Polymere sind Polyethylen, modifiziertes Polyethylen, Ethylen/α-Olefin-Copolymere, Polypropylen, Ethylen/Vinylester-Copolymere, Ethylen/Vinylalkohol-Copolymere und Ethylen/(Meth)acrylsäureester-Copolymere. Das Olefin-(Co)Polymer ist besonders bevorzugt ein Polyethylen oder ein Ethylen/1-Octen-Copolymer.

Die schlauchförmige Nahrungsmittelhülle umfasst weiterhin mindestens eine Polymerschicht (B), die aus einer mono- oder biaxial orientierten Polyamidfolie besteht.

Unter einer mono- oder biaxialen Verstreckung versteht der Fachmann die Quer- und/oder Längsverstreckung der Polyamidfolie bei Temperaturen zwischen der Glasübergangstemperatur und der Schmelztemperatur des Polyamids. Durch die mono- oder biaxiale Orientierung gewinnt die Folie Hooke-elastische Eigenschaften in Richtung der Verstreckung. Die Verstreckung führt zu einer Orientierung der kettenförmigen Moleküle und einer dehnungsinduzierten Kristallisation. Dies führt zu einer erhebliche Steigerung der Festigkeit der Polyamidschicht, zu einem Hookeelastischen Rücksprungverhalten sowie zu einem thermischen Schrumpfvermögen der Nahrungsmittelhülle. Letzteres ist abhängig davon, ob oder in wieweit die Polyamidfolie nach der Verstreckung thermofixiert wurde. Der Schrumpf der Polyamidfolie und damit der Nahrungsmittelhülle setzt bei allgemein etwa 80 °C ein.

Die schlauchförmige Nahrungsmittelhülle ist elastisch und umschließt auch nach dem Befüllen mit dem Füllgut und dem Koch- bzw- Brühvorgang das Füllgut faltenfrei. Des weiteren wirkt die Polyamidschicht (B), gegebenenfalls zusammen mit einer oder mehreren weiteren Polymerschicht(en) (C) als Barriere für Sauerstoff und/oder Wasserdampf und gibt der schlauchförmigem Nahrungsmittelhülle die erforderliche Festigkeit.

Die Polymerschicht (B) umfasst mindestens eine biaxial orientierte Polyamidfolie. Die Polyamidfolie besteht im wesentlichen aus aliphatischen (Co)Polyamiden. Der Begriff "(Co)Polyamid" steht dabei für "Polyamid und/oder Copolyamid". Bevorzugt ist eine Polyamidfolie, die überwiegend oder vollständig aus aliphatischen Polyamiden und/oder (Co)Polyamiden besteht. Bevorzugte aliphatische Polyamide sind Polyamid 6, Polyamid 6.6, Polyamid 6/6.6, Polyamid 6.10, Polyamid 6/12 und Mischungen daraus. Die Polyamidfolie kann darüber hinaus übliche Additive in untergeordneten Anteilen (< 5 Gew.-%, bezogen auf das Gewicht der Folie) enthalten, beispielsweise Antiblockmittel, Gleitmittel, Antistatika, Stabilisatoren und/oder Farbpigmente. Die mono- oder biaxial orientierten Polyamidfolie weist zweckmäßig eine Dicke im Bereich von 5 bis 60 µm, bevorzugt von 10 bis 40 µm, besonders bevorzugt von 15 bis 25 µm, auf.

Die mono- oder biaxial orientierte Polyamidfolie ist vorzugsweise teilweise thermofixiert. Die Thermofixierung ist eine Wärmebehandlung, bei der es zu einer teilweisen Relaxation der orientierten Polymerketten kommt. Dadurch wird ein zu starker Schrumpf der Folie bei Wärmeeinwirkung vermieden.

Die erfindungsgemäße schlauchförmige Nahrungsmittelhülle umfasst weiterhin mindestens eine Klebstoffschicht. Als besonders vorteilhaft haben sich Reaktiv-Klebstoffsysteme erwiesen, die als Reaktivkomponenten ein flüssiges Diisocyanat und ein flüssiges Diol umfassen. Der ausreagierte Klebstoff ist bevorzugt ein Polyesterurethan oder Polyetherurethan. Diese Klebstoffe haben den Vorteil, dass sie nach dem Mischen der Diisocyanat- und der Diol-Komponente eine gewisse Zeit verarbeitbar bleiben und anschließend ohne Verdampfen von Lösungsmittel und ohne Erwärmen aushärten. Das ist insbesondere deshalb vorteilhaft weil kein zusätzliches Erwärmen bei der Herstellung der schlauchförmigen Nahrungsmittelhülle nötig ist und dadurch ein Schrumpf der Nahrungsmittelhülle während der Klebstoffhärtung vermieden wird.

Die Klebstoffschicht wird bevorzugt aus einem Klebstoff aus mindestens einem Diisocyanat und mindestens einem Diol gebildet. Diese Komponenten sind bevorzugt aliphatische, cycloaliphatische oder aromatische Diisocyanate bzw. Polyesterdiole oder Polyetherdiole. Die Klebstoffschicht weist allgemein eine Dicke von 1 bis 10 µm, bevorzugt von 1,5 bis 6 µm, besonders bevorzugt von 2 bis 4 µm, auf.

Zusätzlich zu der ersten Polymerschicht (A) und der mindestens einen weiteren Polymerschicht (B) umfasst die erfindungsgemäße schlauchförmige Nahrungsmittelhülle bevorzugt mindestens eine weitere Polymerschicht (C). Die Polymerschicht (C) umfasst bevorzugt ein olefinisches (Co)Polymer, bevorzugt Polyethylen, modifizierter Polyethylen, ein Ethylen-Copolymer, Polypropylen, ein Ethylen/Vinylacetat-Copolymer oder ein Ethylen/Vinylalkohol-Copolymer. Wenn die Nahrungsmittelhülle mehrere Polymerschichten (C) umfasst, so können diese die gleiche oder eine verschiedene Polymer-Zusammensetzung aufweisen.

Gemäß der vorliegenden Erfindung sind mindestens zwei Polymerschichten durch die mindestens eine Klebstoffschicht unmittelbar miteinander verbunden. Gemäß einer Ausführungsform der vorliegenden Erfindung ist die erste Polymerschicht (A) durch eine Klebstoffschicht unmittelbar mit der mindestens einen Polymerschicht (B) verbunden oder die erste Polymerschicht (A) ist durch eine Klebstoffschicht unmittelbar mit einer Polymerschicht (C) verbunden, auf die eine Polymerschicht (A) mit oder ohne dazwischenliegende Klebeschicht aufgebracht ist.

Gemäß einer Ausführungsform der vorliegenden Erfindung ist auf der ersten Polymerschicht (A) eine Polymerschicht (C) ohne dazwischenliegende Klebstoffschicht aufgebracht. Die Polymerschicht (C) wiederum ist durch eine Klebstoffschicht unmittelbar mit einer Polymerschicht (B) verbunden.

Wenn die schlauchförmige Nahrungsmittelhülle mehr als eine Klebstoffschicht umfasst, ist gemäß einer Ausführungsform der vorliegenden Erfindung die erste Polymerschicht (A) durch eine Klebstoffschicht unmittelbar mit einer Polymerschicht (B) verbunden und die Polymerschicht (B) ist durch eine Klebstoffschicht unmittelbar mit einer Polymerschicht (C) verbunden oder die erste Polymerschicht (A) ist durch eine Klebstoffschicht unmittelbar mit einer Polymerschicht (C) verbunden und die Polymerschicht (C) ist durch eine Klebstoffschicht unmittelbar mit einer Polymerschicht (B) verbunden.

Die schlauchförmige Nahrungsmittelhülle kann noch weitere Polymerschichten (C) oder noch weitere Klebeschichten und Polymerschichten (C) umfassen. Gemäß einer Ausführungsform der vorliegenden Erfindung ist die erste Polymerschicht (A) durch eine Klebstoffschicht unmittelbar mit einer Polymerschicht (B) verbunden, die durch eine Klebstoffschicht unmittelbar mit einer Polymerschicht (C) verbunden ist, wobei diese wiederum durch einer Klebstoffschicht unmittelbar mit einer weiteren Polymerschicht (C) verbunden ist.

Bevorzugt weist die Nahrungsmittelhülle eine der folgenden Strukturen auf:BOPA // Klebstoff // PE // Faserpapier oder -vlies
BOPA // Klebstoff // PE // EVA // Faserpapier oder -vlies
BOPA // PE // Klebstoff // PE // Faserpapier oder -vlies
PE // BOPA // PE // Klebstoff // PE // Faserpapier oder -vlies
PE // EVOH // BOPA// Klebstoff // PE // Faserpapier oder -vlies
PE // Klebstoff // BOPA // Klebstoff // PE // Faserpapier oder -vlies
PE // Klebstoff // EVOH // Klebstoff // BOPA // Klebstoff // PE // Faserpapier oder - vlies

In der Aufzählung steht
- BOPA: für eine biaxial orientierte Folie aus aliphatischem Polyamid,
- EVA: für ein Ethylen/Vinylacetat-Copolymer und
- EVOH: für ein Ethylen/Vinylalkohol-Copolymer (= verseiftes EVA).

Die schlauchförmige Nahrungsmittelhülle weist eine überlappende Längsnaht auf, wobei diese Längsnaht geklebt, genäht, geschweißt oder gesiegelt sein kann. Bevorzugt wird die Längsnaht verklebt. Alternativ kann die Längsnaht auch mit einem Folienstreifen (Siegelband), das mittig über den auf Stoss zusammengeführten Enden (Bahnkanten) der Nahrungsmittelhülle angeordnet ist, realisiert werden.

Die erfindungsgemäße schlauchförmige Nahrungsmittelhülle weist allgemein eine Wandstärke von 20 bis 160 µm, bevorzugt von 50 bis 150 µm, besonders bevorzugt von 100 bis 130µm, und einen Innendurchmesser im Bereich von 20 bis 250 mm, bevorzugt von 40 bis 180 mm, besonders bevorzugt von 60 bis 160mm, auf.

Die Nahrungsmittelhülle zeigt allgemein eine Wasserdampfdurchlässigkeit von 3 bis 100 g/m² d, bevorzugt von 10 bis 50 g/m² d, gemessen gemäß DIN 53 122 bei einseitiger Beaufschlagung mit Luft von 85 % relativer Feuchte bei 23 °C. Die Sauerstoffdurchlässigkeit beträgt allgemein 5 bis 100 cm³/m² d, bevorzugt 10 bis 80 cm³/m² d, bestimmt gemäß DIN 53 380 bei 23 °C und 53 % relativer Feuchte.

Die innere Faserschicht kann einen Farb-, Rauch-, Aroma- und/oder Geschmacksstoffe, wie Flüssigrauch oder Karamel, aufnehmen, speichern und an ein in der Hülle befindliches Nahrungsmittel übertragen. Gegenstand der vorliegenden Erfindung ist daher ebenfalls eine schlauchförmige Nahrungsmittelhülle in der die innere Faserschicht der schlauchförmigen Hülle, mit Farb-, Rauch-, Aroma- und/oder Geschmacksstoffe(n) imprägniert ist. Diese Farb-, Rauch-, Aroma- und/oder Geschmacksstoff werden in der fertigen Koch- oder Brühwurst in flüssiger oder fester Form auf das Nahrungsmittel übertragen.

Daneben betrifft die Erfindung ein Verfahren zur Herstellung der oben beschriebenen Nahrungsmittelhülle mit den Schritten:
(i) Beschichten eines Faserpapiers oder Faservlieses auf der Seite, die von der späteren Innenseite der Hülle abgewandt ist, mit einem thermoplastischen Polymer, so dass eine geschlossene erste Beschichtung erhalten wird;
(ii) gegebenenfalls Auftragen weiterer Schichten aus thermoplastischem Polymer auf die erste Beschichtung;
(iii) Bereitstellen einer bei Einwirkung von Wärme schrumpffähigen, mono- oder biaxial verstreckten Folie auf Basis von aliphatischem Polyamid oder eines Laminats mit einer solchen Polyamidfolie;
(iv) Verbinden der mono- oder biaxial verstreckten Folie auf Basis von aliphatischem (Co)Polyamid oder des Laminats mit der beschichteten Seite des Faserpapiers oder Faservlieses mit einer Polymerschicht zu einem Verbund, wobei das Verbinden bei einer Temperatur erfolgt, die nicht ausreicht um den Schrumpf der Polyamidfolie auszulösen;
(v) gegebenenfalls Schneiden des in Schritt (iv) erhaltenen Verbunds in Streifen;
(vi) Formen des in Schritt (iv) erhaltenen Verbunds oder eines in Schritt (v) erhaltenen Streifens davon zu einem Schlauch mit überlappenden oder aneinander stoßenden Längskanten; und
(vii) Verbinden der überlappenden Längskanten, z.B. durch einen Kleber, oder Verbinden der aneinander stoßenden Längskanten durch ein Nahtband, z.B. durch einen Siegelstreifen oder einen mit Haftkleber beschichteten Folienstreifen.

Nach dem Verbinden des beschichteten Faserpapiers bzw. -vlieses mit der Polyamidfolie bzw. des Laminats mit einer solchen Folie wird zunächst eine Flachware erhalten. Die Flachware wird in Streifen geschnitten, wobei die Streifen eine Breite von 70 bis 800 mm, bevorzugt 100 bis 600mm, besonders bevorzugt 130 bis 560 mm aufweisen. In einem weiteren Verfahrensschritt werden die Streifen zu einem Schlauch mit überlappender Längsnaht oder einer Stoßnaht (aneinander stoßende Längskanten) mit darüberliegendem Folienstreifen verklebt, genäht, geschweißt oder gesiegelt.

Das Verbinden der Längskanten in Schritt (vii) kann beispielsweise mit einer Klebenaht oder mit einem Folienstreifen erfolgen, der über die Stoßkante gelegt wird. Der Folienstreifen kann auf einer Seite eine Klebstoffschicht aufweist und mit dieser Seite über die Stoßkante gelegt werden. Es ist auch möglich, den Folienstreifen durch Nähen, Schweißen oder Siegeln mit den Längskanten zu verbinden.

Bei dem Verbinden in Schritt (iv) kann der Klebstoff auf das beschichtete Faserpapier bzw. -vlies oder auf die Polyamidfolie bzw. das Laminat mit der Polyamidfolie aufgetragen werden. Der Klebstoff ist vorzugsweise ein Zweikomponentensystem basierend auf einem Diisocyanat und einem Diol. In der fertigen Nahrungsmittelhülle umfaßt die Schicht dementsprechend ein Polyesterurethan oder Polyetherurethan. Das eigentliche Verbinden erfolgt zweckmäßig in einer Preßwalzenstation bei einem Druck von 1,5 bis 3 bar.

Wie in den oben genannten beispielhaften Schichtabfolgen dargestellt, befinden sich gegebenenfalls zusätzliche Kleberschichten in dem Laminat mit der biaxial orientierten Polyamidfolie.

Der Klebstoff wird vorzugsweise bei Raumtemperatur auf die beschichtete Seite des Faserpapiers bzw. -vlieses oder der Polyamidfolie bzw. des Laminats mit der Polyamidfolie aufgetragen. Das Auftragen des Klebstoffs erfolgt zweckmäßig bei einem Druck von 0,2 bis 50 bar, bevorzugt von 1 bis 25 bar, besonders bevorzugt von 5 bis 10 bar. Ein Klebstoff mit einem Diol und einem Diisocyanat hat den Vorteil, dass er bei Raumtemperatur über einfache Pumpsysteme und Düsen bei relativ geringem Druck aufgetragen werden kann.

Verwendet wird die schlauchförmige Nahrungsmittelhülle insbesondere als künstliche Wursthülle, bevorzugt für Brüh- oder Kochwurst.

Die erfindungsgemäße Hülle zeigt eine deutliche Rücksprung-Elastizität, so dass sie auch nach dem Brühen bzw. Kochen noch faltenfrei an dem Nahrungsmittel anliegt. Dadurch ist der Austritt/das Auftreten von Fleischsaft minimiert. Eine unelastische Hülle würde dagegen das Füllgut nach dem Abkühlen nicht mehr straff umschließen. Bei einer solchen Hülle kann es zur Ansammlung von Fleischsaft zwischen der Füllgut-Oberfläche und der Nahrungsmittelhülle ("purge") und infolgedessen zu Gewichtseinbußen beim abgeschälten Endprodukt kommen.

Die nachfolgenden Beispiele sollen die Erfindung illustrieren, ohne sie zu beschränken.

### Beispiel 1:

### Herstellung einer schlauchförmigen Nahrungsmittelhülle

Eine biaxial orientierte, teilweise thermofixierte Polyamidfolie (Streckverhältnis 1 : 2,9 in Maschinenrichtung und 1 : 3,4 in Querrichtung) mit einer Materialstärke von 12 µm und ein mit Polyethylen beschichtetes Faservlies mit einem Flächengewicht von 47 g/m² wurden auf eine Kaschieranlage zu einem Verbund zusammengefügt. Dabei wurde zunächst die biaxial orientierte Polyamidfolie mit einem Polyurethanklebstoff bestrichen. Das Auftragsgewicht des Klebstoffs betrug hierbei 2,4 g/m². Von einer zweiten Abrollung wurde das mit Polyethylen beschichtetes Faservlies der Pressstation der Kaschieranlage zugeführt. Die mit dem Kleber bestrichene biaxial orientierte Polyamidfolie sowie das mit Polyethylen beschichtetes Faservlies wurden dann in einer Presswalzenstation zusammengeführt und mit einem Druck von 2 bar verpreßt. Dabei wurde die mit Polyethylen beschichtete Seite des Faservlies gegen die biaxial orientierte Polyamidfolie kaschiert. Nach der Presswalzenstation wurde das Material der Aufrollung zugeführt. 8.000 m der Hülle wurden dabei zu einer Rolle aufgerollt. Der Kaschiervorgang erfolgte bei einer Geschwindigkeit von 180 m/min. Nach einer Reaktionszeit des Klebstoffs von 5 Tagen wurde der Verbund auf einer Schneidanlage in mehrere Streifen in einer Breite von 330 mm geschnitten und dann zu einem Schlauch mit überlappender Klebenaht verklebt. Die Rollenware wurde anschließend mit einem Flüssigrauch (Typ Enviro® 24P von Red Arrow Co.) imprägniert. Dazu wurde Flüssigrauch über das Schlauchende in die Hülle eingefüllt und die Hülle dann horizontal durch ein Paar angetriebener Quetschwalzen geführt. Das Imprägnieren der Hülle erfolgte bei einer Geschwindigkeit von 50 m/min. Direkt anschließend wurde die imprägnierte Hülle zu einer Rolle aufgewickelt. Das Auftragsgewicht der Imprägnierung betrug 23 g/m².

Abschnitte der Hülle wurden mit Brühwurstbrät prall gefüllt und an den Enden mittels Metallclipsen verschlossen. Die Abfüllungen wurden in einer zur Herstellung von Brühwurst üblichen Kochkammer aufgehängt und durch Einleiten von Wasserdampf für ca. 2 h ansteigend auf 72 °C Kerntemperatur erhitzt. Die Brühwürste wurden dann durch Duschen mit kaltem Wasser auf Raumtemperatur abgekühlt. Die Hülle lag auch danach noch straff und faltenfrei an dem Wurstbrät an.

Durch das Füllen und das anschließende Erhitzen der Abfüllung bei 85 °C Kammertemperatur wurde die Hülle mechanisch gedehnt (ca. 10 bis 15% in Längs- und Querrichtung). Beim anschließenden Abkühlen kam es wieder zu einer Kontraktion des Füllgutes und der Umfang der Würste verringerte sich wieder etwa auf den Wert, der vor dem Erhitzen vorlag.

Nach dem Abschälen der Hülle zeigte das Wurstbrät eine deutliche Rauchfarbe sowie ein intensives Raucharoma.

### Beispiel 2:

### Herstellung einer schlauchförmigen Nahrungsmittelhülle

Ein Cellulosefaserpapier mit einem Flächengewicht von 30g/m² wurde auf einer Extrusionsbeschichtungsanlage mit einem Polyethylen beschichtet. Hierzu wurde das Polyethylen in einem Extruder bei einer Temperatur von 280 °C aufgeschmolzen und einer Breitschlitzdüse zugeführt. Das Flächengewicht der extrudierten Polyethylen-Beschichtung betrug 23 g/m². Daraus ergibt sich ein Gesamtflächengewicht von 53 g/m². Dieses Material wurde auf einer Kaschieranlage mit einer 20 µm biaxial orientierten Polyamidfolie (Streckverhältnis 1 : 2,9 in Maschinenrichtung, 1 : 3,4 in Querrrichtung) kaschiert. Dabei wurde zunächst die biaxial orientierte Polyamidfolie mit einem Polyurethankleber bestrichen. Der Kleberauftrag betrug 3 g/m². In der Presswalzenstation der Kaschieranlage trafen das mit Polyethylen beschichtete Cellulosepapier und die biaxial orientierte Polyamidfolie aufeinander und wurden bei einem Anpressdruck von 1,8 bar zu einem Laminat vereint und aufgerollt. Nach einer Reaktionszeit des Klebstoffs von 5 Tagen wurde das Material in eine Breite von 500 m zugeschnitten und zu einem Schlauch verklebt. Das Imprägnieren erfolgte mit einer Karamell-Rezeptur bei einem Auftragsgewicht der Imprägnierung von 34 g/m².

Die Hülle wurde mit Brühwurst-Brät gefüllt, auf 72 °C Kerntemperatur erwärmt und anschließend 1 Tag lang bei 5 °C und ca. 30% relativer Feuchte gelagert. Danach wurde die Hülle abgeschält. Das freiliegende Brät zeigt eine deutliche Karamellfarbe.

## Patentansprüche

1. Schlauchförmige Nahrungsmittelhülle mit einer inneren Faserschicht, die die Innenseite der schlauchförmigen Nahrungsmittelhülle bildet, und zwei oder mehrere Polymerschichten, **dadurch gekennzeichnet, dass** die Polymerschichten
(i) eine erste thermoplastische Polymerschicht (A) umfassen, mit der die innere Faserschicht auf der der Innenseite abgewandten Seite der schlauchförmigen Hülle beschichtet ist, wobei die erste Polymerschicht eine geschlossene Schicht darstellt und die Faserschicht vollständig abdeckt, und
(ii) mindestens eine thermoplastische Polymerschicht (B) umfassen, die aus einer mono- oder biaxial orientierten Folie auf Basis von Polyamid und/oder Copolyamid besteht,
wobei mindestens zwei der Polymerschichten durch eine Klebstoffschicht unmittelbar miteinander verbunden sind und wobei die innere Faserschicht aus einem Faservlies aus Fasern aus einem thermoplastischen Kunststoff und Cellulosefasern besteht.

2. Nahrungsmittelhülle gemäß Anspruch 1, **dadurch gekennzeichnet, dass** die Nahrungsmittelhülle mindestens eine Polymerschicht (C) umfasst.

3. Nahrungsmittelhülle gemäß Anspruch 1 oder 2, **dadurch gekennzeichnet, dass** die innere Faserschicht aus einem Gewebe, Gestricke, oder einem Faserpapier besteht, wobei die Fasern aus thermoplastischem Kunststoff vorzugsweise eine durchschnittliche Länge von 0,3 bis 15 mm und eine Dicke von 0,5 bis 8,0 den aufweisen, und der Anteil der Fasern aus thermoplastischem Kunststoff vorzugsweise 1 bis 20 Gew.-% beträgt, bezogen auf das Gewicht des Faservlies.

4. Nahrungsmittelhülle gemäß Anspruch 3, **dadurch gekennzeichnet, dass** die Cellulosefasern Hanffasern oder Abacafasern oder Fasern aus regenerierter Cellulose sind.

5. Nahrungsmittelhülle gemäß einem oder mehreren der Ansprüche 1 bis 4, **dadurch gekennzeichnet, dass** die innere Faserschicht ein Faservlies oder ein Faserpapier ist und ein Flächengewicht im Bereich von 10 bis 70 g/m², bevorzugt von 20 bis 55 g/m², besonders bevorzugt von 25 bis 35 g/m² aufweist.

6. Nahrungsmittelhülle gemäß einem oder mehreren der Ansprüche 1 bis 5, **dadurch gekennzeichnet, dass** die erste Polymerschicht (A) ein Olefin-(Co)-Polymer umfasst, wobei das Olefin-(Co)-Polymer bevorzugt ausgewählt ist aus der Gruppe bestehend aus Polyethylen, modifiziertem Polyethylen, Ethylen/α-Olefin-Copolymeren, Polypropylen, Ethylen/Vinylester-Copolymeren, Ethylen/Vinylalkohol-Copolymeren und Ethylen/(Meth)acrylsäureester-Copolymeren, wobei das Olefin-(Co)-Polymer besonders bevorzugt ein Polyethylen oder ein Ethylen/1-Octen-Copolymer ist.

7. Nahrungsmittelhülle gemäß einem oder mehreren der Ansprüche 1 bis 6, **dadurch gekennzeichnet, dass** die Polyamidfolie eine Dicke im Bereich von 5 bis 60 µm, bevorzugt von 10 bis 40 µm, besonders bevorzugt von 15 bis 25 µm aufweist.

8. Nahrungsmittelhülle gemäß einem oder mehreren der Ansprüche 1 bis 7, **dadurch gekennzeichnet, dass** die Klebstoffschicht einen Zweikomponenten-Reaktiv-Klebstoff umfasst, der auf einem Diisocyanat und einem Diol basiert, wobei der ausreagierte Klebstoff bevorzugt ausgewählt ist aus der Gruppe bestehend aus Polyesterurethan und Polyetherurethan.

9. Nahrungsmittelhülle gemäß einem oder mehreren der Ansprüche 1 bis 8, wobei die mindestens eine Klebstoffschicht eine Dicke im Bereich von 1 bis 10 µm, bevorzugt von 1,5 bis 6 µm, besonders bevorzugt von 2 bis 4 µm, aufweist.

10. Nahrungsmittelhülle gemäß einem oder mehreren der Ansprüche 2 bis 9, **dadurch gekennzeichnet, dass** die mindestens eine Polymerschicht (C) Polyethylen, modifiziertes Polyethylen, Ethylen-Copolymere, Polypropylen, Ethylen/Vinylacetat-Copolymere und/oder Ethylen/Vinylalkohol-Copolymere umfasst.

11. Nahrungsmittelhülle gemäß einem oder mehreren der Ansprüche 2 bis 10, **dadurch gekennzeichnet, dass** die Nahrungsmittelhülle mehrere Polymerschichten (C) umfasst, wobei die unterschiedlichen Polymerschichten (C) das gleiche Polymer oder unterschiedliche Polymere ausgewählt aus der Gruppe bestehend aus Polyethylen, modifiziertem Polyethylen, EthylenCopolymeren, Polypropylen, Ethylen/Vinylacetat-Copolymeren und Ethylen/Vinylalkohol-Copolymeren umfassen, wobei vorzugsweise die erste Polymerschicht (A) durch eine Klebstoffschicht unmittelbar mit einer Polymerschicht (B) verbunden ist oder die erste Polymerschicht (A) durch eine Klebstoffschicht unmittelbar mit einer Polymerschicht (C) verbunden ist.

12. Nahrungsmittelhülle gemäß einem oder mehreren der Ansprüche 2 bis 11, **dadurch gekennzeichnet, dass** die ersten Polymerschicht (A) durch eine Klebstoffschicht unmittelbar mit einer Polymerschicht (B) verbunden und die Polymerschicht (B) durch eine Klebstoffschicht unmittelbar mit einer Polymerschicht (C) verbunden ist oder die erste Polymerschicht (A) durch eine Klebstoffschicht unmittelbar mit einer Polymerschicht (C) verbunden ist und die Polymerschicht (C) durch eine Klebstoffschicht unmittelbar mit einer Polymerschicht (B) verbunden ist.

13. Nahrungsmittelhülle gemäß einem oder mehreren der Ansprüche 1 bis 12, **dadurch gekennzeichnet, dass** die innere Faserschicht mit Farb-, Rauch-, Aroma- und/oder Geschmacksstoffe(n) imprägniert ist.

14. Verfahren zur Herstellung der Nahrungsmittelhülle gemäß einem oder mehreren der Ansprüche 1 bis 13 mit den Schritten:
(i) Beschichten eines Faserpapiers oder Faservlieses auf der Seite, die von der späteren Innenseite der Hülle abgewandt ist, mit einem thermoplastischen Polymer, so dass eine geschlossene erste Beschichtung erhalten wird;
(ii) gegebenenfalls Auftragen weiterer Schichten aus thermoplastischen Polymeren auf die erste Beschichtung;
(iii) Bereitstellen einer bei Einwirkung von Wärme schrumpffähigen, mono- oder biaxial verstreckten Folie auf Basis von aliphatischem (Co)Polyamid oder Bereitstellen eines Laminats mit einer solchen Polyamidfolie;
(iv) Verbinden der mono- oder biaxial verstreckten Folie auf Basis von aliphatischem (Co)Polyamid oder des Laminats mit der beschichteten Seite des Faserpapiers oder Faservlieses mit einer Klebstoffschicht zu einem Verbund, wobei das Verbinden bei einer Temperatur erfolgt, die nicht ausreicht um den Schrumpf der Polyamidfolie auszulösen;
(v) gegebenenfalls Schneiden des in Schritt (iv) erhaltenen Verbunds in Streifen;
(vi) Formen des in Schritt (iv) erhaltenen Verbunds oder eines in Schritt (v) erhaltenen Streifens davon zu einem Schlauch mit überlappenden oder aneinander stoßenden Längskanten; und
(vii) Verbinden der Längskanten.

15. Verfahren gemäß Anspruch 14, **dadurch gekennzeichnet, dass** die Längskanten überlappen und mit einer Naht verbunden werden, wobei das Verbinden der überlappenden Längskanten durch Kleben, Nähen, Schweißen oder Siegeln erfolgt, oder dass die Längskanten aneinander stoßen und mit einem Folienstreifen verbunden werden, der mittig über die Stoßkante gelegt wird, wobei vorzugsweise der Folienstreifen eine Klebstoffschicht aufweist und über die aneinander stoßenden Längskanten gelegt wird, so dass sich die Klebstoffschicht zwischen den aneinander stoßenden Längskanten und dem Folienstreifen befindet, oder dass der Folienstreifen durch Nähen, Schweißen oder Siegeln mit den aneinander stoßenden Längskanten verbunden wird.

16. Verwendung der Nahrungsmittelhülle gemäß einem oder mehreren der Ansprüche 1 bis 13 als künstliche Wursthülle, bevorzugt für Brüh- oder Kochwurst.

## Claims

1. Tubular food casing having an inner fibre layer, which forms the inside of the tubular food casing, and two or more polymer layers, **characterized in that** the polymer layers
(i) comprise a first thermoplastic polymer layer (A), with which the inner fibre layer is coated on the side of the tubular casing that faces away from the inside, with the first polymer layer constituting an uninterrupted layer and completely covering the fibre layer, and
(ii) comprise at least one thermoplastic polymer layer (B) which consists of a monoaxially or biaxially oriented film based on polyamide and/or copolyamide,
where at least two of the polymer layers are joined to one another directly by a layer of adhesive and where the inner fibre layer consists of a nonwoven fibre web made of fibres comprising a thermoplastic polymer and cellulose fibres.

2. Food casing according to Claim 1, **characterized in that** the food casing comprises at least one polymer layer (C).

3. Food casing according to Claim 1 or 2, **characterized in that** the inner fibre layer consists of a woven fabric, knitted fabric, or a fibre paper, where the fibres made of thermoplastic polymer preferably have an average length of 0.3 to 15 mm and a thickness of 0.5 to 8.0 den, and the fraction of the fibres made of thermoplastic polymer is preferably 1 to 20 % by weight, based on the weight of the nonwoven fibre web.

4. Food casing according to Claim 3, **characterized in that** the cellulose fibres are hemp fibres or abaca fibres or fibres of regenerated cellulose.

5. Food casing according to one or more of Claims 1 to 4, **characterized in that** the inner fibre layer is a nonwoven fibre web or a fibre paper and has a basis weight in the range from 10 to 70 g/m², preferably from 20 to 55 g/m², more preferably from 25 to 35 g/m².

6. Food casing according to one or more of Claims 1 to 5, **characterized in that** the first polymer layer (A) comprises an olefin (co)polymer, the olefin (co)polymer being preferably selected from the group consisting of polyethylene, modified polyethylene, ethylene/α-olefin copolymers, polypropylene, ethylene/vinyl ester copolymers, ethylene/vinyl alcohol copolymers and ethylene/(meth)acrylic ester copolymers, the olefin (co)polymer more preferably being a polyethylene or an ethylene/1-octene copolymer.

7. Food casing according to one or more of Claims 1 to 6, **characterized in that** the polyamide film has a thickness in the range from 5 to 60 µm, preferably from 10 to 40 µm, more preferably from 15 to 25 µm.

8. Food casing according to one or more of Claims 1 to 7, **characterized in that** the layer of adhesive comprises a two-component reactive adhesive which is based on a diisocyanate and a diol, the fully reacted adhesive being preferably selected from the group consisting of polyesterurethane and polyetherurethane.

9. Food casing according to one or more of Claims 1 to 8, wherein the at least one layer of adhesive has a thickness in the range from 1 to 10 µm, preferably from 1.5 to 6 µm, more preferably from 2 to 4 µm.

10. Food casing according to one or more of Claims 2 to 9, **characterized in that** the at least one polymer layer (C) comprises polyethylene, modified polyethylene, ethylene copolymers, polypropylene, ethylene/vinyl acetate copolymers and/or ethylene/vinyl alcohol copolymers.

11. Food casing according to one or more of Claims 2 to 10, **characterized in that** the food casing comprises a plurality of polymer layers (C), with the various polymer layers (C) comprising the same polymer or different polymers selected from the group consisting of polyethylene, modified polyethylene, ethylene copolymers, polypropylene, ethylene/vinyl acetate copolymers and ethylene/vinyl alcohol copolymers, where preferably the first polymer layer (A) is joined by a layer of adhesive directly to a polymer layer (B), or the first polymer layer (A) is joined by a layer of adhesive directly to a polymer layer (C).

12. Food casing according to one or more of Claims 2 to 11, **characterized in that** the first polymer layer (A) is joined by a layer of adhesive directly to a polymer layer (B), and the polymer layer (B) is joined by a layer of adhesive directly to a polymer layer (C), or the first polymer layer (A) is joined by a layer of adhesive directly to a polymer layer (C), and the polymer layer (C) is joined by a layer of adhesive directly to a polymer layer (B).

13. Food casing according to one or more of Claims 1 to 12, **characterized in that** the inner fibre layer is impregnated with colour, smoke, aroma and/or flavour substance(s).

14. Method for producing the food casing according to one or more of Claims 1 to 13, comprising the steps of:
(i) coating a fibre paper or nonwoven fibre web, on the side facing away from the subsequent inside of the casing, with a thermoplastic polymer, to give an uninterrupted first coating;
(ii) optionally applying further layers of thermoplastic polymers to the first coating;
(iii) providing a monoaxially or biaxially stretched film that is shrinkable on exposure to heat and is based on aliphatic (co)polyamide or providing a laminate comprising such a polyamide film;
(iv) joining the monoaxially or biaxially stretched film based on aliphatic (co)polyamide, or the laminate, to the coated side of the fibre paper or nonwoven fibre web with a layer of adhesive to form an assembly, the joining taking place at a temperature which is not sufficient to trigger the shrinkage of the polyamide film;
(v) optionally cutting the assembly obtained in step (iv) into strips;
(vi) forming the assembly obtained in step (iv), or a strip thereof obtained in step (v), into a tube having overlapping or abutting longitudinal edges; and
(vii) joining the longitudinal edges.

15. Method according to Claim 14, **characterized in that** the longitudinal edges overlap and are joined with a seam, the joining of the overlapping longitudinal edges taking place by bonding, stitching, welding or sealing, or **in that** the longitudinal edges abut one another and are joined with a film strip which is placed centrally over the abutting edge, where preferably film strip has a layer of adhesive and is placed over the abutting longitudinal edges, so that the layer of adhesive is located between the abutting longitudinal edges and the film strip, or **in that** the film strip is joined by stitching, welding or sealing to the abutting longitudinal edges.

16. Use of the food casing according to one or more of Claims 1 to 13 as artificial sausage casing, preferably for scalded-emulsion or cooked-filling sausage.

## Revendications

1. Enveloppe alimentaire tubulaire munie d'une couche de fibres interne, formant la face intérieure de l'enveloppe alimentaire tubulaire, et de deux ou plus de deux couches de polymère, **caractérisée en ce que** les couches de polymère
(i) comprennent une première couche de polymère thermoplastique (A), dont la couche de fibres interne est revêtue du côté de l'enveloppe tubulaire qui est détourné de la face intérieure, dans laquelle la première couche de polymère est une couche fermée et recouvre complètement la couche de fibres, et
(ii) comprennent au moins une couche de polymère thermoplastique (B) constituée d'un film à orientation monoaxiale ou biaxiale à base de polyamide et/ou de copolyamide,
dans laquelle au moins deux des couches de polymère sont directement reliées par une couche de colle, et dans laquelle la couche de fibres interne est constituée d'une nappe de fibres à base de fibres en matière thermoplastique et de fibres de cellulose.

2. Enveloppe alimentaire selon la revendication 1, **caractérisée en ce que** l'enveloppe alimentaire comprend au moins une couche de polymère (C).

3. Enveloppe alimentaire selon la revendication 1 ou 2, **caractérisée en ce que** la couche de fibres interne est constituée d'un tissu, d'un tricot ou d'un papier à base de fibres, dans laquelle les fibres en matière thermoplastique présentent de manière préférée une longueur moyenne comprise entre 0,3 et 15 mm et une épaisseur comprise entre 0,5 et 8,0 et la teneur des fibres en matière thermoplastique est de manière préférée comprise entre 1 et 20 % en poids, par rapport au poids de la nappe de fibres.

4. Enveloppe alimentaire selon la revendication 3, **caractérisée en ce que** les fibres de cellulose sont des fibres de chanvre ou des fibres d'abaca ou des fibres de cellulose régénérée.

5. Enveloppe alimentaire selon l'une quelconque ou plusieurs des revendications 1 à 4, **caractérisée en ce que** la couche de fibres interne est une nappe de fibres ou un papier à base de fibres et présente un grammage dans la plage comprise entre 10 et 70 g/m², de manière préférée comprise entre 20 et 55 g/m², de manière particulièrement préférée comprise entre 25 et 35 g/m².

6. Enveloppe alimentaire selon l'une quelconque ou plusieurs des revendications 1 à 5, **caractérisée en ce que** la première couche de polymère (A) comprend un (co)-polymère d'oléfine, dans laquelle le (co)-polymère d'oléfine est de manière préférée choisi dans le groupe constitué de polyéthylène, polyéthylène modifié, copolymères d'éthylène/α-oléfine, polypropylène, copolymères d'éthylène/ester de vinyle, copolymères d'éthylène/alcool vinylique, et copolymères d'éthylène/ester (méth)acrylique, dans laquelle le (co)-polymère d'oléfine est de manière particulièrement préférée un polyéthylène ou un copolymère d'éthylène/1-octène.

7. Enveloppe alimentaire selon l'une quelconque ou plusieurs des revendications 1 à 6, **caractérisée en ce que** le film de polyamide présente une épaisseur dans la plage comprise entre 5 et 60 µm, de manière préférée comprise entre 10 et 40 µm, de manière particulièrement préférée comprise entre 15 et 25 µm.

8. Enveloppe alimentaire selon l'une quelconque ou plusieurs des revendications 1 à 7, **caractérisée en ce que** la couche de colle comprend une colle réactive à deux composants à base d'un diisocyanate et d'un diol, dans laquelle la colle dont la réaction est terminée est de manière préférée choisie dans le groupe constitué de polyesteruréthane et polyétheruréthane.

9. Enveloppe alimentaire selon l'une quelconque ou plusieurs des revendications 1 à 8, dans laquelle la au moins une couche de colle présente une épaisseur dans la plage comprise entre 1 et 10 µm, de manière préférée comprise entre 1,5 et 6 µm, de manière particulièrement préférée comprise entre 2 et 4 µm.

10. Enveloppe alimentaire selon l'une quelconque ou plusieurs des revendications 2 à 9, **caractérisée en ce que** la au moins une couche de polymère (C) comprend du polyéthylène, du polyéthylène modifié, des copolymères d'éthylène, du polypropylène, des copolymères d'éthylène/acétate de vinyle et/ou des copolymères d'éthylène/alcool vinylique.

11. Enveloppe alimentaire selon l'une quelconque ou plusieurs des revendications 2 à 10, **caractérisée en ce que** l'enveloppe alimentaire comprend plusieurs couches de polymère (C), dans laquelle les différentes couches de polymère (C) sont composées du même polymère ou de polymères différents choisi(s) dans le groupe constitué de polyéthylène, polyéthylène modifié, copolymères d'éthylène, polypropylène, copolymères d'éthylène/acétate de vinyle et copolymères d'éthylène/alcool vinylique, dans laquelle la première couche de polymère (A) est de manière préférée reliée directement à une couche de polymère (B) par une couche de colle ou la première couche de polymère (A) est reliée directement à une couche de polymère (C) par une couche de colle.

12. Enveloppe alimentaire selon l'une quelconque ou plusieurs des revendications 2 à 11, **caractérisée en ce que** la première couche de polymère (A) est reliée directement à une couche de polymère (B) par une couche de colle et la couche de polymère (B) est reliée directement à une couche de polymère (C) par une couche de colle ou la première couche de polymère (A) est reliée directement à une couche de polymère (C) par une couche de colle et la couche de polymère (C) est reliée directement à une couche de polymère (B) par une couche de colle.

13. Enveloppe alimentaire selon l'une quelconque ou plusieurs des revendications 1 à 12, **caractérisée en ce que** la couche de fibres interne est imprégnée d'une substance colorante, à base de fumée, aromatique et/ou sapide.

14. Procédé de fabrication de l'enveloppe alimentaire selon l'une quelconque ou plusieurs des revendications 1 à 13, comprenant les étapes consistant à :
(i) revêtir un papier à base de fibres ou une nappe de fibres du côté qui est détourné de la face intérieure ultérieure de l'enveloppe avec un polymère thermoplastique de manière à obtenir un premier revêtement fermé ;
(ii) appliquer éventuellement d'autres couches de polymères thermoplastiques sur le premier revêtement ;
(iii) fournir un film à base de (co)polyamide aliphatique thermo-rétractable, étiré de manière monoaxiale ou biaxiale, ou fournir un stratifié muni d'un tel film de polyamide ;
(iv) relier le film étiré de manière monoaxiale ou biaxiale à base de (co)polyamide aliphatique ou le stratifié à la face revêtue du papier à base de fibres ou de la nappe de fibres grâce à une couche de colle pour obtenir un composite, dans lequel la liaison intervient à une température insuffisante pour déclencher la rétractation du film de polyamide ;
(v) découper éventuellement le composite obtenu à l'étape (iv) en bandes ;
(vi) former le composite obtenu à l'étape (iv) ou une bande de celui-ci obtenue à l'étape (v) pour obtenir un tube dont les bords longitudinaux se chevauchent ou se rejoignent ; et
(vii) relier les bords longitudinaux.

15. Procédé selon la revendication 14, **caractérisé en ce que** les bords longitudinaux se chevauchent et sont reliés grâce à un raboutage, dans lequel la liaison des bords longitudinaux qui se chevauchent intervient par collage, couture, soudure ou scellage, ou **en ce que** les bords longitudinaux se rejoignent et sont reliés grâce à une bande de film placée de manière centrale sur les bords de jonction, dans lequel la bande de film présente de manière préférée une couche de colle et est placée sur les bords longitudinaux se rejoignant de sorte que la couche de colle se trouve entre les bords longitudinaux se rejoignant et la bande de film, ou **en ce que** la bande de film est reliée aux bords longitudinaux se rejoignant par couture, soudure ou scellage.

16. Utilisation de l'enveloppe alimentaire selon l'une quelconque ou plusieurs des revendications 1 à 13 comme enveloppe artificielle pour saucisses, de manière préférée pour des saucisses échaudées ou des saucisses cuites.
